Europäisches Patentamt

European Patent Office

Office européen des brevets

(19)

(11) Veröffentlichungsnummer: **0 058 888**
**A2**

(12) **EUROPÄISCHE PATENTANMELDUNG**

(21) Anmeldenummer: **82101002.2**

(22) Anmeldetag: **11.02.82**

(51) Int. Cl.³: **C 09 B 67/12,** C 09 B 67/16,
C 09 B 67/18

(30) Priorität: **23.02.81 US 236955**
**19.06.81 US 275488**

(43) Veröffentlichungstag der Anmeldung: **01.09.82**
**Patentblatt 82/35**

(84) Benannte Vertragsstaaten: **CH DE GB IT LI**

(71) Anmelder: **MOBAY CHEMICAL CORPORATION, Dyes
and Pigments Division P.O. Box 419, Hawthorne New
Jersey 07507 (US)**

(72) Erfinder: **Santimauro, John Francis, 731 Birchwood
Drive, Wyckoff New Jersey 07481 (US)**
Erfinder: **Gerson, Herman, 505 LaGuardia Place, New
York New York 10012 (US)**

(74) Vertreter: **Gremm, Joachim, Dr. et al, Bayer AG c/o
Zentralbereich Patente, Marken und Lizenzen,
D-5090 Leverkusen 1, Bayerwerk (DE)**

(54) **Konditionierung von Phthalocyaninverbindungen.**

(57) Verfahren zur Konditionierung polyhalogenierter Phthalocyanine zu Pigmenten, dadurch gekennzeichnet, dass man eine rohe, polyhalogenierte Phthalocyaninverbindung in einem flüssigen Medium, welches Wasser und eine organische Flüssigkeit aus der Reihe aliphatische Alkohole, Alkylester aromatischer Carbonsäuren, aliphatische Carbonsäuren, Alkylester von aliphatischen Carbonsäuren, Formamide, Acetamide, aliphatische Amine enthält, gegebenenfalls in Gegenwart eines Säurepuffers, rührt.

0058888

Mobay-Chemical Corp.

PG/bc/c

Konditionierung von Phthalocyaninverbindungen

Die Erfindung betrifft ein neues Verfahren zur Konditionierung roher, unkonditionierter polyhalogenierter Phthalocyaninverbindungen zu Pigmenten.

Polyhalogenierte Phthalocyaninverbindungen werden bei der Herstellung gewöhnlich in einer Form erhalten, in der sie nicht als Pigmente verwendet werden können. Es sind verschiedenartige Methoden bekannt, solche rohen Phthalocyaninverbindungen in eine Pigmentform zu überführen, z.B. mechanische Teilchenverkleinerung, Behandlung mit Schwefelsäure oder Lösungsmitteln. Für die Lösungsmittelbehandlung werden hauptsächlich aromatische Lösungsmittel wie Trichlorbenzol, Nitrobenzol oder Chlornaphthalin in Gegenwart oder Abwesenheit von Wasser verwendet. Die Ergebnisse dieser Verfahren sind oft unbefriedigend.

Der Stand der Technik beschreibt Konditionierungsverfahren die sich in der Durchführung und im Ergebnis wesentlich vom erfindungsgemäßen Verfahren unter-

HCC 40-Ausland

scheiden. Hingewiesen sei auf die DE-AS 1 114 462, DE-OS 2 449 231, GB-PS 1 088 736 und GB-PS 1 039 489, die sich auf die Verwendung von Benzolderivaten, Phenolen und Petrolether beziehen; weiterhin die DE-OS 2 013 818, DE-AS 1 114 462 und DE-OS 2 022 183.

Überraschend wurde nun gefunden, daß rohe, unkonditionierte polyhalogenierte Phthalocyaninverbindungen wirksam und wirtschaftlich zur Pigmentform konditioniert werden können, dadurch, daß man eine rohe polyhalogenierte Phthalocyaninverbindung in einem flüssigen Medium, welches Wasser und eine organische Flüssigkeit aus der Reihe aliphatische Alkohole, insbesondere Alkanole, Alkylester, insbesondere $C_1$-$C_4$-Alkylester, aromatischer Carbonsäuren, insbesondere von mono- oder dicyclischen aromatischen Carbonsäuren, aliphatische Carbonsäuren, insbesondere $C_1$-$C_8$-Alkancarbonsäuren, Alkylester, insbesondere $C_1$-$C_8$-Alkylester von aliphatischen Carbonsäuren, insbesondere von $C_1$-$C_8$-Alkancarbonsäuren, Formamide, Acetamide, aliphatische Amine, insbesondere $C_1$-$C_8$-Alkylamine, enthält, rührt.

Die nach diesem Verfahren konditionierten Phthalocyaninverbindungen besitzen sehr gute Pigmenteigenschaften und vor allem eine hervorragende Dispergierbarkeit. Darüber hinaus bietet das Verfahren ökologische Vorteile, da die organischen Agentien, ohne das Abwasser zu verunreinigen, leicht entfernt werden können, z.B. durch Wasserdampfdestillation oder wie im

HCC 40

Falle aromatischer Ester durch Verseifung und anschließende Wiedergewinnung der aromatischen Säure.

Das erfindungsgemäße Verfahren findet Anwendung zur
Konditionierung von polyhalogenierten Phthalocyaninverbindungen, insbesondere von rohen unkonditionierten Polychlorkupfer- und Polychlorbromkupferphthalocyaninen. Als Beispiel für ein Polychlorkupferphthalocyanin sei ein Kupferphthalocyanin, das im Durchschnitt 13,5 Chloratome enthält, erwähnt. Der Chlor-
und/oder Bromgehalt kann jedoch auch höher oder niedriger sein und beispielsweise 45 bis 50 Gew.-% betragen. Unter Polychlorbromkupferphthalocyaninen
werden Kupferphthalocyanine verstanden, die Chlor
und Brom in beliebigen Verhältnissen enthalten; beispielsweise kann der Gesamthalogengehalt zwischen 50
und 60 Gew.-% liegen.

Folgende Pigmente sind typisch: C.I. Pigment Green 7
(C.I. 74260) und C.I. Pigment Green 36 (C.I. 74265).

Das Rohprodukt, das in die Pigmentform überführt werden soll, kann nach irgendeinem bekannten Verfahren,
z.B. durch Halogenierung von Kupferphthalocyanin im
Wirbelbett, in Schwefeldichlorid, in organischen Flüssigkeiten, in einer $AlCl_3$/NaCl-Schmelze oder in einer
$AlCl_3$/$SO_2Cl_2$-Schmelze hergestellt werden.

Weitere Beispiele für die Herstellung der Rohprodukte
die nach dem erfindungsgemäßen Verfahren in Pigmente
überführt werden können, sind:

HCC 40

Die Herstellung von C.I. Pigment Green 7 (C.I. 74260) gemäß DE-OS 2 449 231, Beispiel 1 sowie die Herstellung von Pigment Green 36 (C.I. 74265) in Moser und Thomas: Phthalocyanine Compounds, Reinhold Publishing Co., New York, N. Y. 1963, S. 171 ff und in DE-OS 2 449 231, Beispiel 2.

Das erfindungsgemäße Konditionierungsverfahren wird in der Weise ausgeführt, daß man das Rohphthalocyanin in wäßriger Suspension, die Wasser und eine organische Flüssigkeit aus der Reihe aliphatische Alkohole, Alkylester aromatischer Carbonsäuren, aliphatische Carbonsäuren, Alkylester von aliphatischen Carbonsäuren, Formamide, Acetamide, aliphatische Amine, enthält, gegebenenfalls in Gegenwart eines Säurepuffers wie Natriumacetat oder Trinatriumphosphat, rührt.

Beispiele für geeignete organische Flüssigkeiten sind: Flüssige aliphatische Alkohole, insbesondere Alkanole mit 1 bis 10 C-Atomen und Alkandiole mit 2 bis 3 C-Atomen wie Methanol, Ethanol, Butanol, Hexanol, Decanol, Ethylenglykol und Propylenglykol; aliphatische Carbonsäuren mit 1 bis 8 C-Atomen, insbesondere Alkancarbonsäuren und ihre $C_1$-$C_4$-Alkylester wie Ameisensäure, Essigsäure, Propionsäure, n-Buttersäure, i-Buttersäure, Valeriansäure, Trimethylessigsäure, Capronsäure, Caprylsäure, Pelargonsäure, Ameisensäuremethylester, -ethylester, Essigsäure-methylester, -ethylester, -propylester, -butylester, -amylester, Propionsäure-methylester, -ethylester, Buttersäure-methylester, -ethylester, Valeriansäure-methylester, -ethylester, Adipin-

HCC 40

säuremethylester, -ethylester, Zitronensäuretriethylester; Formamide wie Formamid, N-Methylformamid und N,N-Dimethylformamid; Acetamide wie N-Methylacetamid, N,N-Dimethylacetamid, N-Ethylacetamid und N,N-Diethylacetamid; aliphatische Amine, insbesondere $C_1$-$C_6$-Alkyl- oder $C_1$-$C_6$-Hydroxyalkylamine wie Diethylamin, Triethylamin, Propylamin, Dipropylamin, Butylamin, Amylamin, Hexylamin, Ethylendiamin, Trimethylendiamin, Pentamethylendiamin, Ethanolamin und Triethanolamin.

Bei einer bevorzugten Ausführungsform des Verfahrens werden als organische Flüssigkeiten $C_1$-$C_4$-Alkylester von aromatischen Carbonsäuren, insbesondere von Benzol-mono- oder -di-carbonsäuren, die durch Hydroxy substituiert sein können, eingesetzt. Typische Beispiele sind die $C_1$-$C_4$-Alkylester von Benzoesäure, Salicylsäure und Phthalsäure wie Benzoesäuremethylester, Salicylsäuremethylester und Phthalsäuredimethylester.

Der Wassergehalt des Konditionierungsmediums sollte 1 bis 20 Gew.-Teile pro Gew.-Teil Pigment betragen. Bevorzugt wird ein Verhältnis von 3 bis 5 Gew.-Teilen Wasser pro Gew.-Teil Pigment.

Die organische Flüssigkeit sollte im Konditionierungsmedium in Mengen von mindestens 0,2 Gew.-Teile pro Gew.-Teil Pigment anwesend sein. Dieses Verhältnis kann in weiten Grenzen schwanken. Bevorzugt werden 0,3 bis 0,8 Gew.-Teile der organischen Flüssigkeit pro Gew.-Teil Pigment eingesetzt.

HCC 40

Das neue Konditionierungsverfahren wird bei 0°C bis etwa 200°C, vorzugsweise bei 20°C bis 160°C, durchgeführt. Die Behandlungsdauer liegt vorzugsweise bei etwa 2 bis etwa 24 Stunden.

Gegebenenfalls wird ein Säurepuffer wie Natriumacetat oder Trinatriumphosphat eingesetzt. Die Menge an Puffer beträgt bevorzugt 10 bis 25 Gew.-%, bezogen auf das Pigmentgewicht.

Die rohe, unkonditionierte Phthalocyaninverbindung kann in trockener Form in das erfindungsgemäße Verfahren eingesetzt werden. Bevorzugt setzt man jedoch einen feuchten Preßkuchen ein.

Nach Beendigung der Konditionierung wird das Pigment in üblicher Weise, z.B. durch Wasserwäsche oder Destillation mit oder ohne Dampf von der organischen Flüssigkeit befreit, wobei die Anwendbarkeit dieser Methoden von den Löslichkeitseigenschaften der organischen Flüssigkeit bestimmt werden.

Von organischen Estern kann das Pigment leicht durch Verseifung der Ester zu wasserlöslichen Carboxylaten befreit werden.

Die folgenden Beispiele veranschaulichen die vorliegende Erfindung ohne sie auf Einzelheiten zu beschränken.

HCC 40

Die im Text verwendete Abkürzung C.I. bezieht sich
auf das Farbstoffklassifikationssystem in Colour
Index, 3. Ausgabe; Hrg.: The Society of Dyers and
Colourists, England.

HCC 40

Beispiel 1

100 g (berechnet auf Pigmenttrockengewicht) rohes, unkonditioniertes C.I. Pigment Green 36 (in Form eines
wäßrigen Breis) werden in einen Rührautoklaven gegeben.
Man gibt 10 g Natriumacetat und soviel Wasser, daß insgesamt (unter Einschluß des Wassers im Pigmentbrei) 400 g
Wasser vorliegen, hinzu. Unter Rühren werden 50 g Butanol hinzugegeben und der Ansatz 7 Stunden auf 110°C
erhitzt. Butanol wird abdestilliert und die wäßrige
Pigmentaufschlämmung filtriert und der Rückstand mit
Wasser gewaschen und getrocknet.

Beispiel 2

Man arbeitet analog zu Beispiel 1, setzt jedoch nur
25 g Butanol zu und erhitzt 8 Stunden auf 90°C.

Beispiel 3

Man arbeitet analog zu Beispiel 1, jedoch unter Einsatz von insgesamt 200 g Wasser und 60 g Butanol und
erhitzt 8 Stunden auf 140°C.

Beispiel 4

Man arbeitet analog zu Beispiel 1, jedoch unter Einsatz von insgesamt 600 g Wasser und 120 g Butanol und
erhitzt 16 Stunden auf 90°C.

HCC 40

## Beispiel 5

Man arbeitet analog zu Beispiel 1, jedoch unter Einsatz von insgesamt 300 g Wasser und 300 g Methanol anstelle von Butanol und erhitzt 10 Stunden auf 125°C.

## Beispiel 6

Man wiederholt Beispiel 5, setzt jedoch C.I. Pigment Green 7 anstelle von C.I. Pigment Green 36 ein und verwendet 500 g Methanol.

## Beispiel 7

100 g (berechnet auf Pigmenttrockengewicht) rohes, unkonditioniertes C.I. Pigment Green 7 (in Form eines wäßrigen Breis) werden in einen mit einer Rührvorrichtung ausgestatteten Autoklaven gegeben. Man gibt 100 g Natriumacetat und soviel Wasser, daß insgesamt (unter Einschluß des Wassers im Pigmentbrei) 400 g Wasser vorliegen, hinzu. Unter Rühren fügt man 130 g Ethylenglykol zu und erhitzt den Ansatz unter Rühren 7 Stunden auf 140°C. Die Aufschlämmung wird filtriert, das Pigment zur Entfernung von Ethylenglykol gründlich mit Wasser gewaschen und getrocknet.

## Beispiel 8

100 g (bezogen auf Pigmenttrockengewicht) eines wäßrigen Preßkuchens von rohem, unkonditionierten C.I. Pigment Green 36 werden in einen Autoklaven der mit

HCC 40

einem Rührer versehen ist gegeben. Man gibt 100 g Natriumacetat und soviel Wasser, daß insgesamt (unter Einschluß des Wasser im Preßkuchen) 300 g Wasser vorliegen, hinzu. Nun fügt man unter Rühren 110 g Essigsäure zu und erhitzt den Ansatz 16 Stunden unter Rühren auf 90°C. Der Ansatz wird filtriert, der Rückstand zur Entfernung der Säure gründlich mit Wasser gewaschen und getrocknet.

Beispiel 9

100 g (bezogen auf Pigmenttrockengewicht) eines wäßrigen Preßkuchens von rohem, unkonditionierten C.I. Pigment Green 36 werden in einen Autoklaven gegeben, der mit einem Rührer versehen ist. Dann gibt man 10 g Natriumacetat und soviel Wasser, daß insgesamt (unter Einschluß des Wassers im Preßkuchen) 400 g Wasser vorliegen, hinzu. Unter Rühren fügt man nun 40 g Triethanolamin zu und erhitzt den Ansatz unter Rühren 16 Stunden auf 90°C. Der Brei wird filtriert, der Rückstand gründlich mit Wasser gewaschen, wobei das Amin entfernt wird, und getrocknet.

Beispiel 10

Man arbeitet analog zu Beispiel 9, jedoch unter Verwendung von 110 g Triethanolamin.

Beispiel 11

Man arbeitet analog zu Beispiel 9, jedoch unter Ver-

HCC 40

wendung von 120 g Dimethylformamid anstelle von Triethanolamin und insgesamt 300 g Wasser.

## Beispiel 12

In einen 500 ml Kolben werden 50 g (berechnet auf Pigmenttrockengewicht) Pigment Green 7 in Form eines wäßrigen Breis gegeben. Dann fügt man soviel Wasser, daß das Gesamtwassergewicht 200 g beträgt und 10 g Natriumacetat, hinzu. Nach portionsweiser Zugabe von 15 g Methylbenzoat wird die Mischung auf 98°C erhitzt und bei dieser Temperatur 16 Stunden lang gehalten. Nach Abkühlung der Mischung auf 80°C werden 15 g 50 %ige wäßrige Natronlauge zugefügt und der Ansatz 2 Stunden auf 80°C erhitzt. Das Pigment wird durch Filtrieren, Waschen und Trocknen isoliert.

## Beispiel 13

Ein 2 l Autoklav wird mit 300 g (bezogen auf Pigmenttrockengewicht) C.I. Pigment Green 36 in Form eines wäßrigen Breis und soviel Wasser, daß insgesamt (unter Einschluß des Wassers im Pigmentbrei) 1200 g Wasser vorliegen, sowie 60 g Natriumacetat, beschickt. Danach wird der Autoklav verschlossen und man rührt eine halbe Stunde lang. Danach gibt man langsam 90 g Dimethylphthalat hinzu, erhitzt das Gemisch auf 145°C und hält es 8 Stunden bei dieser Temperatur. Nach dem Abkühlen auf 80°C werden 50 g einer 50 %igen wäßrigen Natronlauge hinzugefügt und das Erhitzen für 2 Stunden bei 80°C fortgesetzt. Das Pigment wird

HCC 40

durch Filtrieren, Waschen und Trocknen isoliert.

Beispiel 14

Ein 1 l Kolben wird mit 100 g (bezogen auf Pigmenttrockengewicht) C.I. Pigment Green 7 in Form eines wäßrigen Breis beschickt. Man gibt soviel Wasser, daß insgesamt (unter Einschluß des Wassers im Pigmentbrei) 400 g Wasser vorliegen und 20 g Natriumacetat, hinzu. Der Autoklav wird verschlossen und man rührt eine halbe Stunde. Danach gibt man langsam 45 g Dimethylphthalat hinzu und erhitzt das Gemisch 8 Stunden auf 60°C unter Rühren. Nach Zugabe von 45 g NaOH wird das Gemisch 2 Stunden auf 80°C erhitzt. Das Pigment wird durch Filtrieren, Waschen und Trocknen isoliert.

Beispiel 15

100 g (bezogen auf Pigmenttrockengewicht) C.I. Pigment Green 7 (roher Brei) werden in einen 2 l Auto- klaven gegeben. Man fügt soviel Wasser, daß insgesamt (unter Einschluß des Wassers im Pigmentbrei) 544 g Wasser vorliegen sowie 7 g Trinatriumphosphat, hinzu. Danach werden 30 g Benzoesäuremethylester langsam hinzugegeben und das Gemisch 8 Stunden auf 140°C unter Rühren erhitzt. Nach dem Abkühlen auf 80°C werden 30 g einer 50 %igen wäßrigen Natronlauge hinzugefügt und das Erhitzen 2 Stunden lang auf 80°C fortgesetzt. Das Pigment wird durch Filtrieren, Wa- schen und Trocknen isoliert.

HCC 40

- 13 -

Beispiel 16

Man arbeitet analog zu Beispiel 12, jedoch unter Verwendung von 25 g Methylbenzoat und insgesamt 250 ml Wasser und erhitzt 7 Stunden auf 90°C.

Beispiel 17

Man arbeitet analog zu Beispiel 16, erhitzt jedoch 3 Stunden auf 90°C.

Beispiel 18a)-d)

Ein 1 l Kolben wird mit 100 g (bezogen auf Pigmenttrockengewicht) Pigment Green 36 in Form eines wäßrigen Preßkuchens beschickt. Man gibt soviel Wasser, daß insgesamt (unter Einschluß des Wassers im Pigmentbrei) a) 600 g, b) 400 g, c) 400 g und d) 600 g Wasser vorliegen, sowie 20 g Natriumacetat, hinzu. Der Autoklav wird verschlossen und man rührt eine halbe Stunde. Danach werden a) 75 g, b) 60 g, c) 60 g und d) 30 g Dimethylphthalat langsam hinzugefügt und das Gemisch a) 16 Stunden auf 90°C, b) 7 Stunden auf 140°C, c) 4 Stunden auf 140°C und d) 8 Stunden auf 140°C unter Rühren erhitzt. Nach Zugabe von 45 g NaOH wird das Gemisch 2 Stunden auf 80°C erhitzt. Das Pigment wird durch Filtrieren, Waschen und Trocknen isoliert.

Beispiel 19

Man arbeitet analog zu Beispiel 14, jedoch unter Ver-

HCC 40

wendung von insgesamt 600 g Wasser und 75 g Dimethylphthalat. Das Konditionierungsgemisch wird 10 Stunden bei 110°C gehalten.

Gemäß oben beschriebener Arbeitsweisen können rohes Pigment Green 36 und Pigment Green 7 auch mit Erfolg konditioniert werden, wenn man die folgenden Ansätze verwendet und wie oben beschrieben durch alkalische Verseifung aufarbeitet:

Beispiel 20

100 g (bezogen auf Pigmenttrockengewicht) C.I. Pigment Green 36 in Form eines wäßrigen Preßkuchens, insgesamt 500 g Wasser, 30 g Dioctylphthalat, werden 16 Stunden auf 90°C erhitzt.

Beispiel 21

100 g (bezogen auf Pigmenttrockengewicht) C.I. Pigment Green 36 in Form eines wäßrigen Preßkuchens, insgesamt 200 g Wasser, 30 g Essigsäureethylester, werden 16 Stunden auf 70°C erhitzt.

Beispiel 22

100 g, bezogen auf Pigmenttrockengewicht, C.I. Pigment Green 7 in Form eines wäßrigen Preßkuchens, insgesamt 400 g Wasser und 50 g Zitronensäuretriethylester werden 16 Stunden auf 90°C erhitzt.

HCC 40

## Beispiel 23

100 g (bezogen auf Pigmenttrockengewicht) C.I. Pigment Green 7 in Form eines wäßrigen Preßkuchens, insgesamt 400 g Wasser sowie 25 g Salicylsäuremethylester werden 8 Stunden auf 90°C erhitzt.

## Beispiel 24

100 g (bezogen auf Pigmenttrockengewicht) C.I. Pigment Green 7 in Form eines wäßrigen Preßkuchens, insgesamt 200 g Wasser sowie 50 g Salicylsäuremethylester werden 16 Stunden auf 90°C erhitzt.

## Beispiel 25

100 g (bezogen auf Pigmenttrockengewicht) rohes, unkonditioniertes C.I. Pigment Green 7 in Form eines wäßrigen Breis werden in einen Autoklaven, der mit einem Rührer versehen ist, gegeben. 10 g Natriumacetat und soviel Wasser, daß insgesamt (unter Einschluß des Wassers im Pigmentbrei) 400 g Wasser vorliegen, werden nun hinzugefügt. Unter Rühren gibt man dann 50 g Benzoesäuremethylester hinzu und rührt 8 Stunden bei Raumtemperatur. Der Ansatz wird durch Hinzufügen von 100 g einer 50 %igen Natronlauge alkalisch gestellt und das Gemisch 2 Stunden auf 80°C erhitzt (oder bei Raumtemperatur stehengelassen), bis die Hydrolyse erfolgt ist. Die resultierende wäßrige Aufschlämmung wird dann filtriert, alkalifrei gewaschen und bei 80°C getrocknet.

## HCC 40

0058888

Beispiel 26

10 Teile trockenes, rohes, unkonditioniertes C.I. Pigment Green 7 werden in einen Rührautoklaven gegeben.
Unter Rühren fügt man nun 44 Teile Wasser und 6 Teile
Benzoesäuremethylester hinzu, sowie 0,1 Teil eines
handelsüblichen, nicht-ionischen, anionischen oder
kationischen, oberflächenaktiven Mittels wie etwa
Triton, X-100 oder X-102, mit einer solchen Geschwindigkeit, daß eine kontinuierliche Benetzung stattfindet, wobei man unter Rühren arbeitet. Der Autoklav
wird verschlossen, auf 145°C erhitzt, bei dieser Temperatur 8 Stunden lang gehalten und dann auf 80°C
gekühlt. Das Reaktionsgemisch wird mit 6 Teilen einer 50 %igen wäßrigen Lösung von Natriumhydroxid versetzt. Der Autoklav wird dann geschlossen und 2 Stunden auf 80°C erhitzt. Nach dem Abkühlen auf 40°C oder
darunter wird filtriert, der Rückstand mit Wasser bis
zur Alkalifreiheit gewaschen und dann an der Luft getrocknet.

Beispiel 27

Man arbeitet wie in Beispiel 26 mit der Ausnahme, daß
das Methylbenzoat durch die gleiche Menge Butanol ersetzt wird und daß man anstelle der Behandlung mit
Natriumhydroxid das Butanol abdestilliert. Das entstandene Produkt wird filtriert, mit Wasser gewaschen und dann an der Luft getrocknet.

HCC 40

Beispiel 28

Man arbeitet analog zu Beispiel 27 mit der Abänderung, daß C.I. Pigment Green 36 anstelle von C.I. Pigment Green 7 eingesetzt wird.

Beispiel 29

Man arbeitet analog zu Beispiel 26 mit der Abänderung, daß anstelle von Methylbenzoat Diethylphthalat eingesetzt wird.

HCC 40

0053888

Patentansprüche

1) Verfahren zur Konditionierung polyhalogenierter Phthalocyanine zu Pigmenten, dadurch gekennzeichnet, daß man eine rohe, polyhalogenierte Phthalocyaninverbindung in einem flüssigen Medium, welches Wasser und eine organische Flüssigkeit aus der Reihe aliphatische Alkohole, Alkylester aromatischer Carbonsäuren, aliphatische Carbonsäuren, Alkylester von aliphatischen Carbonsäuren, Formamide, Acetamide, aliphatische Amine enthält, gegebenenfalls in Gegenwart eines Säurepuffers, rührt.

2) Verfahren gemäß Anspruch 1, dadurch gekennzeichnet, daß die Phthalocyaninverbindung Polychlor- oder Polychlorbrom-Kupferphthalocyanin ist.

3) Verfahren gemäß Anspruch 1, dadurch gekennzeichnet, daß die Phthalocyaninverbindung rohes, unkonditioniertes C.I. Pigment Green 7 (C.I. 74260) ist.

4) Verfahren gemäß Anspruch 1, dadurch gekennzeichnet, daß die Phthalocyaninverbindung rohes, unkonditioniertes C.I. Pigment Green 36 (C.I. 74265) ist.

5) Verfahren gemäß den Ansprüchen 1 bis 4, dadurch gekennzeichnet, daß man 0,2 bis 0,8 Gew.-Teile organische Flüssigkeit pro Gew.-Teil Pigment einsetzt.

HCC 40

0058888

6) Verfahren gemäß den Ansprüchen 1 bis 5, dadurch gekennzeichnet, daß man 1 bis 20 Gew.-Teile Wasser pro Gew.-Teil Pigment einsetzt.

7) Verfahren gemäß den Ansprüchen 1 bis 6, dadurch gekennzeichnet, daß die organische Flüssigkeit ein Alkylester einer aromatischen Carbonsäure ist.

8) Verfahren gemäß den Ansprüchen 1 bis 6, dadurch gekennzeichnet, daß die organische Flüssigkeit Phthalsäuredimethylester ist.

9) Verfahren gemäß den Ansprüchen 1 bis 6, dadurch gekennzeichnet, daß die organische Flüssigkeit Benzoesäuremethylester ist.

10) Verfahren gemäß den Ansprüchen 1 bis 6, dadurch gekennzeichnet, daß die organische Flüssigkeit Butanol ist.

HCC 40